# EUROPÄISCHE PATENTSCHRIFT

(11) **EP 2 596 139 B1**
(45) Veröffentlichungstag und Bekanntmachung des Hinweises auf die Patenterteilung: **10.01.2018**
(21) Anmeldenummer: 11737892.7
(22) Anmeldetag: 02.07.2011
(51) Int. Cl.: C22B 1/24, C22B 1/244, C22B 1/245, C22B 1/248, C22B 7/02

(54) **WALZENZUNDERBRIKETTIERUNG**
MILL SCALE BRIQUETTING
PROCÉDÉ DE BRIQUETAGE DE BATTITURES DE LAMINOIR

(30) Priorität: 21.07.2010 DE 102010031888
(43) Veröffentlichungstag der Anmeldung: 29.05.2013
(73) Patentinhaber: RHM Rohstoff-Handelsgesellschaft mbH, 45478 Mühlheim a. d. Ruhr (DE)
(72) Erfinder: MEYNERTS, Udo, 45478 Mülheim a.d. Ruhr (DE); SEABRA DA ROCHA, Saulo, Henrique, 52134 Herzogenrath (DE); MAURER, Michael, 42799 Leichlingen (DE)
(74) Vertreter: Schöneborn, Holger
(86) Internationale Anmeldenummer: PCT/EP2011/003291
(87) Internationale Veröffentlichungsnummer: WO 2012/010254

(56) Entgegenhaltungen:
- EP-A1- 2 210 963

## Beschreibung

Die Erfindung betrifft ein Verfahren zur Agglomeration von eisenoxidhaltigen Reststoffen.

Bei der Stahlerzeugung fallen unterschiedliche Reststoffe an, die häufig signifikante Mengen wertvoller Stoffe enthalten, insbesondere Eisen in Form von Eisenoxiden. Derartige eisenoxidhaltige Reststoffe sind z. B. Filterstäube aus Stahlwerken und Hochöfen, Schlämme aus Gasreinigungen und insbesondere Zunder oder Walzenzunder. Hierbei handelt es sich um bei der Metallverarbeitung entstehenden Materialverlust auf der Metalloberfläche, der auf die Einwirkung von Sauerstoff bei hohen Temperaturen zurückzuführen ist. Beim Walzenzunder z. B. handelt es sich um die Oxidationsschichten, die beim Walzen und Schmieden von Stahl sowie beim Ziehen von Draht anfallen. Ähnliche Abfälle entstehen auch beim Stranggießen. Die Zunderschicht ist für den Walzprozess nachteilig, weshalb sie üblicherweise mit Hilfe eines Hochdruckwasserstrahles entfernt wird. Das Abwasser, das den feinkörnigen Walzenzunder enthält, sammelt sich unterhalb des Walzgerüstes in der Zundergrube, in der sich ein Schlamm absetzt, der allerdings neben dem Metalloxid und Wasser weitere Verunreinigungen, insbesondere in Form von Fetten und Ölen enthält.

Zunder oder Walzenzunder weist meist einen hohen Eisengehalt von ca. 70 % auf, wobei es sich um eine Mischung verschiedener Eisenoxide in Form von FeO (60 bis 66 %), Fe₃O₄ (30 bis 34 %) und Fe₂O₃ (2 bis 5 %) handelt. Daneben sind geringe Mengen von NE-Metalloxiden und Siliciumdioxid enthalten.

In Deutschland fallen bei der Erzeugung von Stahl durchschnittlich 56,2 kg pro Tonne Rohstahl an Rückständen an. Bei der Erzeugung über die Sauerstoffroute fallen 61,2 kg pro Tonne Rohstahl, bei dem Weg über den Elektrolichtbogenofen 37,6 kg pro Tonne Rohstahl an (Institut für Baustoff-Forschung FEhS, 2005). Die Rückstände setzen sich wie folgt zusammen

| Route | Hochofen | Elektrolichtbogen |
|---|---|---|
| Rückstände gesamt | 61,2 kg/t_{Rohstahl} | 37,6 kg/t_{Rohstahl} |
| Filterstäube | 39,9 kg/t_{Rohstahl} | 20,7 kg/t_{Rohstahl} |
| Schlämme | 6,1 kg/t_{Rohstahl} | --- |
| Zunder | 10,9 kg/t_{Rohstahl} | 10,5 kg/t_{Rohstahl} |
| Walzenzunderschlamm | 4,3 kg/t_{Rohstahl} | 6,5 kg/t_{Rohstahl} |

In der Vergangenheit wurden die bei der Stahlerzeugung anfallenden Reststoffe häufig auf Deponien endgelagert, was jedoch aus ökologischer Sicht und im Hinblick auf sich ständig verschärfende Grenzwerte für Umweltbelastungen problematisch ist. Diese Vorgehensweise ist jedoch vor dem Hintergrund des in Deutschland abfallrechtlich begrenzten und endlichen Deponievolumens (übertägig wie untertätig) lediglich eine begrenzte Übergangslösung, die langfristig nicht verfügbar ist. Des Weiteren geht ein großer Teil des Walzenzunders in die Zementindustrie. Aufgrund des hohen Eisenanteils ist jedoch das Recycling von eisenoxidhaltigen Reststoffen wie Zunder und Walzenzunder auch aus wirtschaftlichen Gründen von Interesse.

Grundsätzlich ist das Recycling von Reststoffen in Sinteranlagen möglich. Gerade bei Walzenzunder stellt sich jedoch das Problem, dass der Restölgehalt in Sinteranlagen weniger als 0,3 Gew.-% betragen muss, da anderenfalls die Gefahr eines Schwelbrandes im Elektrofilter besteht. Walzenzunder mit hohem Restölgehalt kann daher nicht unmittelbar in einer Sinteranlage weiterverarbeitet werden. Eine Vorabentölung im Drehrohrofen ist möglich, wünschenswert wäre jedoch, die Reststoffe direkt wieder im Elektroofen in den Stahlerzeugungsprozess einbringen zu können.

Die direkte Wiederverwertung von Walzenzunder bei der Stahlherstellung im Elektrolichtbogenofen ist jedoch nicht möglich, da die Eisenoxidpartikel mit dem Abgas ausgetragen bzw. die Schlackenmenge erhöhen würden, was sich ungünstig auf den Energieverbrauch und die Umwelt auswirkt. Aus diesem Grund ist eine Vorabagglomeration der Reststoffe in Form einer Brikettierung oder Pelletierung sowie die Zugabe eines Kohlenstoffträgers bzw. Reduktionsmittels/Bindemittels notwendig. Aus dem Stand der Technik sind verschiedene Verfahren zur Brikettierung von Zunder und Walzenzunder bekannt, beispielsweise mit Hilfe von Zement (DE 23 60 595), Kalkhydrat und Melasse (EP 0 630 980 A1) oder Silicaten (WO 98/40523 A1). Es hat sich jedoch herausgestellt, dass auf diese Weise hergestellte Briketts keine ausreichende Festigkeit aufweisen. Eine ausreichende Festigkeit ist jedoch von hoher Bedeutung bei der Einbringung der Agglomerate in einen Elektrolichtbogenofen, damit die Agglomerate tief in den Prozess bzw. die Schmelze eindringen können, d. h. auch bei hoher Temperatur müssen die Agglomerate dem Temperaturschock und den mechanischen Belastungen aufgrund des Kontakts mit nicht geschmolzenen Schrottteilen widerstehen, um das Stahlbad möglichst unzerstört erreichen zu können. Die Agglomerate müssen so beschaffen sein, dass sie die auf der Oberfläche der Stahlschmelze befindliche Schlackenschicht durchdringen. Anderenfalls würde der frühe Zerfall des Agglomerats zurück in den staubförmigen Zustand zu einer Erhöhung der Abgasstaubmenge und/oder Schlackenmenge führen. Daneben ist eine hohe Festigkeit auch von Vorteil, damit die Agglomerate sonstigen Beanspruchungen, insbesondere bei Transport, Lagerung und Zufuhr in den Elektrolichtbogenofen Stand halten. Darüber hinaus dürfen die für die Agglomeration erforderlichen Bindemittel weder das Stahlbad noch die Schlackenschicht negativ beeinflussen. Schließlich muss beachtet werden, dass beim Aufschmelzen der Agglomerate möglichst keine Schadstoffe entstehen.

Vorteilhaft ist darüber hinaus, wenn die Agglomerate eine hohe Dichte (möglichst > 2,2 g/cm³) aufweisen, um durch die Schlacke zu gelangen und anschließend die Oberfläche des Stahlbades zu erreichen. Das Agglomerat soll an bzw. in der Oberfläche seine metallischen Anteile so direkt wie möglich in die Schmelze abgeben.

Aus der US 2,865,731 ist auch bereits ein Verfahren bekannt, bei dem Zellulosematerialien verwendet werden, um fein verteiltes Eisenoxid, das beim Waschen von Hämatit anfällt, zu brikettieren. Dabei werden typischerweise 12 bis 18 amerikanische Pfund Zellulosefasern pro Tonne Eisenoxidfeinerz eingesetzt. Es hat sich jedoch herausgestellt, dass auf diese Weise hergestellte Briketts nicht die Anforderungen an Agglomerate erfüllen, wie sie zum Wiedereinbringen in die Stahlerzeugung mit Hilfe eines Elektrolichtbogenofens notwendig sind.

Ausgehend von dem vorbeschriebenen Stand der Technik stellt sich daher die Aufgabe, ein Verfahren zur Erzeugung von Agglomeraten von eisenoxidhaltigen Reststoffen zur Verfügung zu stellen, mit dessen Hilfe sich Agglomerate herstellen lassen, die eine so hohe Festigkeit aufweisen, dass sie für die Wiederverwertung in einem Elektrolichtbogenofen geeignet sind.

Überraschend hat sich herausgestellt, dass derartige Agglomerate von eisenoxidhaltigen Reststoffen durch ein Verfahren herstellbar sind, bei dem Papierschlamm und ggf. die Reststoffe zerkleinert werden und eine Mischung aus trockenen Reststoffen und trockenem Papierschlamm bei einer Temperatur zwischen 70 und 350 °C brikettiert wird, wobei der Wassergehalt der trockenen Reststoffe und des trockenen Papierschlamms jeweils weniger als 5 Gew.-% beträgt, wobei die Mischung 15 bis 35 Gew.-% trockenen Papierschlamm enthält und wobei der Mischung Stahlspäne, Gußspäne, HBI fines, DRI fines und/oder metallhaltige Verpackungsverbundstoffe zugefügt werden.

Bei der Untersuchung verschiedener Bindemittel hat sich herausgestellt, dass verschiedene herkömmliche Bindemittel nicht die an sie gestellten Voraussetzungen herfüllen. Als besonders geeignet hat sich jedoch Papierschlamm, d. h. Faserstoffe auf Zellulosebasis herausgestellt. Dabei ist es allerdings unabdingbar, den Papierschlamm vor der Brikettierung auf einen niedrigen Wassergehalt zu bringen, da sich herausgestellt hat, dass ein zu hoher Wasseranteil die Kompaktierung erheblich behindert. Im Rahmen dieser Beschreibung werden unter trockenem Papierschlamm bzw. trockenen Reststoffen Papierschlamm bzw. Reststoffe mit niedrigem Wassergehalt von weniger als 5 Gew.-% verstanden, eine vollständige Entfernung des Wassers ist i. d. R. weder erforderlich noch möglich.

Typischerweise weist Papierschlamm im Anlieferungszustand einen Wassergehalt von ca. 57 Gew.-% auf. Auch die eisenoxidhaltigen Reststoffe verfügen häufig über einen nicht akzeptablen Wassergehalt, insbesondere wenn es sich um Zunder oder Walzenzunder handelt, bei dem der Wassergehalt durchschnittlich ca. 5 Gew.-% beträgt. Der Papierschlamm und ggf. die Reststoffe können beispielsweise bei einer Temperatur von 85°C über einen Zeitraum von 24 Stunden getrocknet werden. Dabei wird aus dem Papierschlamm ein flockiger Stoff erhalten, der weiter zerkleinert wird. Ebenfalls sinnvoll ist häufig die Zerkleinerung der Reststoffe selbst.

Der Mischung werden neben den eisenoxidhaltigen Reststoffen weitere metallhaltige Komponenten hinzugefügt, nämlich Stahlspäne, Gußspäne und/oder metallhaltige Hüttenreststoffe, nämlich HBI (Hot Briquetted Iron) fines oder DRI (Direct Reduced Iron) fines. Bei HBI fines handelt es sich um Reste von größeren Erzbrocken, die heißt brikettiert werden. Ebenfalls hinzugefügt werden können metallhaltige Verpackungsverbundstoffe, insbesondere Verpackungsverbundstoffe aus Metall und Pappe/Papier. Dies können z. B. zerkleinerte Getränkeverpackungen sein, wie sie als Tetra Pak® oder Tetra Brik® bekannt sind. Es handelt sich dabei um mit einer Aluminiumfolie beschichteten Karton. Selbstverständlich müssen derartige Zusatzstoffe vor der Brikettierung zerkleinert und mit den weiteren Komponenten vermischt werden. Im Falle der Verwendung von papierhaltigen Verpackungsverbundstoffen kann der Papiergehalt ggf. auf den Gesamtgehalt an Papierschlamm in der Mischung angerechnet werden, d. h. die Menge an zu verwendendem Papierschlamm reduziert sich entsprechend. Die zusätzlichen metallhaltigen Komponenten können bis zu einem Anteil von 90 Gew.-% bezogen auf die eisenoxidhaltigen Reststoffe zugegeben werden.

Erfindungsgemäß hat sich überraschend herausgestellt, dass durch eine Heißbrikettierung die Stabilität der Agglomerate deutlich verbessert wird. Hinsichtlich der Festigkeit wurden die Briketts mittels des sog. Brazilian Test untersucht, der für zylindrische Prüfkörper konzipiert ist. Dabei können Briketts von verschiedenen Dimensionen und Schlankheit (Verhältnis der Höhe zum Durchmesser) verglichen werden. Untersucht wird die Spaltzugfestigkeit. Bei durch Heißbrikettierung erhaltenen Briketts wurde eine Zugfestigkeit σ_{bz} von 3,2 MPa gemessen. Darüber hinaus weisen die so erhältlichen Briketts auch eine ausreichend hohe Dichte von mehr als 2,5 g/cm³ auf.

Zum Vergleich wurden ähnliche Versuche mit anderen Bindemitteln unternommen. Dabei wurde festgestellt, dass Briketts mit 10 % Zement nach einer Aushärtung von 28 Tagen lediglich eine maximale Spaltzugfestigkeit von 0,1 bis 0,4 MPa aufweisen, was als nicht ausreichend angesehen werden muss. Hinzu kommt, dass die Briketts selbstreduzierend sein, d. h. genügend Reduktionsmittel enthalten sollten, um die maximalen Anteile an Eisenoxid im metallischen Zustand bei der Wiederverwertung in das Stahlbad zu überführen. Bei der Verwendung von Zement als Bindemittel muss jedoch ein zusätzliches Reduktionsmittel hinzugesetzt werden, damit die Mischung insgesamt selbstreduzierend wirkt, beispielsweise Holzkohle oder Koksgruß. Dies jedoch führt zu einer weiteren Verschlechterung der Spaltzugfestigkeit.

Eine mögliche Ursache der schlechten Ergebnisse mit Zement könnte darin begründet sein, dass dieses Bindemittel sowie der notwendigerweise vorliegende Wassergehalt zu einer weiteren Oxidation des Eisens führt, beispielsweise durch Oxidation von FeO zu Fe₂O₃ oder durch Ausbildung von Hydraten wie Goethit. Die neue Oxidationsstufe sowie die Hydrate schwächen die Bindung zwischen dem Zement und den Oberflächen der Reststoffpartikel, wodurch die Festigkeit reduziert wird.

Auch bei der Verwendung von Kalkhydrat als Bindemittel konnten nur unzureichende Ergebnisse erzielt werden. Nach 28tägiger Aushärtung betrug die Festigkeit nur 0,3 bis 0,5 MPa. Darüber hinaus wiesen die Briketts nur eine unzureichende Dichte von ca. 1,1 g/cm³ auf. Die Zugabe von Melasse zum Kalkhydrat konnte die Festigkeit der Briketts nicht deutlich erhöhen.

Auch die Verwendung von Volclay ergab keine Briketts ausreichender Festigkeit. Bei Verwendung von 5 Gew.-% Volclay betrug diese 0,60 MPa, bei Verwendung von 10 Gew.-% Volclay 0,90 MPa. Durch Langzeitaushärtung konnte die Festigkeit nicht nennenswert verbessert werden. Die Ursache wird, ähnlich wie beim Zement, auf die weitere Oxidation des Eisenoxids zurückgeführt.

Wie bereits erwähnt, handelt es sich bei den eisenoxidhaltigen Reststoffen erfindungsgemäß insbesondere um Zunder oder Walzenzunder, wie er beim Stranggießen und Walzen von Stahl oder anderen Verfahren anfällt. Im Folgenden wird hier der Begriff Walzenzunder verwendet, wobei jedoch klargestellt sei, dass im Kontext dieser Erfindung hierunter sämtliche Arten von Zunder/Walzenzunder zu verstehen sind. Da der Walzenzunder üblicherweise mit Hilfe eines Hochdruckwasserstrahls (250 bis 280 bar) von der Metalloberfläche entfernt wird, weist der Walzenzunder zunächst in der Regel einen hohen Wassergehalt von ca. 5 Gew.% auf. Durch die Trocknung konnten die Brikettiereigenschaften deutlich verbessert werden.

Bei Verwendung von nicht aufbereitetem Papierschlamm, der typischerweise einen Wassergehalt von ca. 57 Gew.-% aufweist, ist die Trocknung ebenfalls von hoher Bedeutung. Nach der Trocknung wird der Papierschlamm zu einem flockigen Stoff mit einer Korngröße < 20 mm. Sowohl der getrocknete Papierschlamm als auch die getrockneten eisenoxidhaltigen Reststoffe müssen einen Wassergehalt von weniger als 5 Gew.-% aufweisen. Bei Verwendung von aufbereitetem Papierschlamm, dem bereits der größte Teil des Wassers entzogen wurde, kann eine zusätzliche Trocknung allerdings auch entbehrlich sein.

Aus dem getrockneten und zerkleinerten Papierschlamm und den in der Regel ebenfalls getrockneten und zerkleinerten eisenoxidhaltigen Reststoffen wird eine Mischung hergestellt, die 15 bis 35 Gew.-% getrockneten Papierschlamm enthält. Gute Ergebnisse hinsichtlich der Festigkeit lassen sich erzielen, wenn der Papierschlamm-Anteil größer als 20 Gew.-% und ggf. größer als 26 Gew.-% ist.

Bei der Verwendung von lediglich getrocknetem, nicht jedoch zerkleinertem Papierschlamm konnte eine Segregation (Entmischung) während der Mischung mit den eisenoxidhaltigen Reststoffen beobachtet werden. Diese Segregationsprobleme werden durch Zerkleinerung der Papierschlammflocken minimiert. Die Zerkleinerung sollte soweit erfolgen, dass 90 Gew.-% des getrockneten und zerkleinerten Papierschlamms eine Korngröße von weniger als 1 mm aufweisen.

Eine Zerkleinerung sollte auch im Hinblick auf die eisenoxidhaltigen Reststoffe, insbesondere den Walzenzunder durchgeführt werden. Walzenzunder in seiner ursprünglichen Form hat eine relativ breite Korngrößenverteilung, d. h. 50 Gew.-% der Partikel sind größer als 0,7 mm. Die großen Partikel sind sehr brüchig und stellen in den Agglomeraten die schwächste Stelle dar, da an diesen Stellen die Ausbildung von Rissen und Brüchen beginnt. Es hat sich herausgestellt, dass Briketts aus feinerem Walzenzunder bei gleich bleibenden übrigen Brikettierparametern eine doppelt so hohe Festigkeit wie Briketts aus nicht aufbereitetem Walzenzunder zeigen. Die Zerkleinerung der Reststoffe sollte soweit erfolgen, dass für 90 Gew.-% des Reststoffes in der Mischung die Korngröße weniger als 1 mm beträgt. Idealerweise sollten weniger als 5 Gew.-% des Reststoffes eine Korngröße von mehr als 1 mm aufweisen. Unter Umständen ist jedoch sowohl hinsichtlich der Zerkleinerung der Reststoffe als auch hinsichtlich des Papierschlamms eine Zerkleinerung auf eine Partikelgröße von max. 2 mm als ausreichend anzusehen.

Als besonders vorteilhaft für die Zerkleinerung der Reststoffe und des Papierschlamms hat sich die Verwendung einer Kugelmühle oder einer Schwingmühle herausgestellt, wobei bevorzugt gleichzeitig mit der Zerkleinerung die Durchmischung dieser und eventueller weiterer Komponenten durchgeführt wird. Es hat sich herausgestellt, dass auf diese Weise die Reststoffe in vorteilhafter Weise in die Fasern hineingepresst werden. Dies verhindert wirkungsvoll die Entmischung der Komponenten. Aufgrund der deutlich unterschiedlichen Dichte von Reststoffen einerseits und Papierfasern andererseits wäre eine Entmischung vor der Brikettierung ansonsten zu erwarten, muss aber im Sinne einer ausreichenden Festigkeit des Briketts verhindert werden.

Bei einer Kugelmühle handelt es sich um eine horizontal gelagerte, drehbare Trommel, in der sich das Mahlgut sowie verschleißfeste Mahlkörper gemeinsam bewegen. Mahlgut, das sich zwischen den Mahlkörpern befindet, wird durch die Stoßbeanspruchung zerkleinert. Als Mahlkörper können Kugeln, zylindrische Körper oder Pebbles eingesetzt werden, wobei sich herausgestellt hat, dass mit zylindrischen Körpern die besten Ergebnisse erzielt werden. Das gleiche gilt bei der Verwendung von Schwingmühlen, bei denen die im Behälter befindlichen Mahlkörper entsprechende Kräfte auf das Mahlgut ausüben, wenn der Behälter in eine Schwingungsbewegung versetzt wird.

Gemäß einer besonders bevorzugten Ausführungsform wird in der Kugel- oder Schwingmühle neben der Mischung und Zerkleinerung der Reststoffe und des Papierschlamms auch die Trocknung und ggf. vor der Heißbrikettierung auch eine Vorheizung der Mischung durchgeführt. Auf diese Weise benötigt man für das erfindungsgemäße Verfahren lediglich zwei Vorrichtungen, nämlich die Kugel- oder Schwingmühle zum Trocknen, Mischen, Zerkleinern und Vorheizen sowie die Brikettpresse für die Brikettierung selbst.

Die Zerkleinerung von Reststoffen und Papierschlamm kann aber auch mit Hilfe einer Hammermühle, einer Schneidmühle oder auf andere dem Fachmann geläufige Weise durchgeführt werden. Zerkleinerung und Durchmischung werden bevorzugt in einem Arbeitsgang durchgeführt, möglich ist aber auch die getrennte Zerkleinerung von Reststoffen und Papierschlamm vor der eigentlichen Durchmischung.

Überraschend hat sich herausgestellt, dass sich mit dem erfindungsgemäßen Verfahren auch ölhaltige eisenoxidhaltige Reststoffe, insbesondere Walzenzunder, zu Agglomeraten verarbeiten lassen, ohne dass hierdurch nicht tolerable negative Auswirkungen auf die Festigkeit herbeigeführt würden. Der Ölgehalt kann dabei max. 5 bis 10 Gew.-% bezogen auf die Reststoffe betragen.

Wie bereits eingangs erwähnt, stellt die Ölhaltigkeit von Walzenzunder bei der Verwendung in Sinteranlagen ein großes Problem dar. Auch bei der Herstellung von Briketts mit anderen Bindemitteln wie Zement macht sich der Ölgehalt hinsichtlich der Beständigkeit der Agglomerate nachteilig bemerkbar.

Die Brikettierung, d. h. die Herstellung von Agglomeraten, wobei erfindungsgemäß unter Agglomeraten nicht nur Briketts sondern auch beispielsweise Pellets zu verstehen sind, wird als Heißbrikettierung durchgeführt, wobei die Temperatur vorteilhafterweise zwischen 90 und 250°C, insbesondere zwischen 90 und 150°C beträgt. Die Brikettierung bei einer Temperatur von ca. 140°C verlief ohne Verklebungsprobleme und hat sich als vorteilhaft herausgestellt. Der am meisten bevorzugte Temperaturbereich liegt somit zwischen 130 und 150°C. Die Agglomerate können z. B. einen Durchmesser zwischen 20 und 50 mm haben.

Gleichzeitig wird bei der Brikettierung ein Druck ausgeübt, der zwischen 10 und 500 MPa, bevorzugt zwischen 30 und 350 MPa und besonders bevorzugt zwischen 100 und 200 MPa beträgt. Bei Anwendung eines Drucks von ca. 150 MPa konnten befriedigende Ergebnisse erzielt werden.

Die Erwärmung der Mischung während der Heißbrikettierung kann auf unterschiedliche Weise erfolgen, beispielsweise mit Hilfe eines Gasstroms von Inertgas, Dampf, heißer Luft oder einer Mischung von Luft und Inertgas. Ebenfalls möglich ist eine Erhitzung mittels Wärmeübertragung, entweder durch unmittelbaren Kontakt oder durch Strahlung.

Der zu brikettierenden Mischung können ein oder mehrere zusätzliche Bindemittel zugefügt werden, beispielsweise flüssige Bindemittel, die bei erhöhter Temperatur stabil sind wie Natriumsilicat (Wasserglas) oder Aluminiumphosphat. Ebenfalls möglich ist der Zusatz von flüssigen Bindemitteln, die die Entmischung vermeiden. Beispiele hierfür sind Melasse oder Sulfitablauge. Eine weitere Möglichkeit besteht in dem Zusatz eines anorganischen Bindemittels zur Unterstützung der Entschwefelung. Hierbei handelt es sich z. B. um Kalkhydrat oder gebrannten Kalk. Geringe Mengen mineralischer Bindemittel können auch dazu dienen, eine verbesserte Hochtemperaturfestigkeit zu erreichen. Der Zusatz sollte in einer Menge von 1 bis 10 Gew.-% bezogen auf die gesamte Masse der Mischung erfolgen.

Der Brikettierungsmischung zur Herstellung der Agglomerate können weitere Stoffe zugesetzt werden, die bei der Herstellung von Legierungen zum Einsatz kommen. Der Zusatz erfolgt in Abhängigkeit von der gewünschten Zusammensetzung des Stahls, der unter Einsatz der agglomerierten eisenoxidhaltigen Reststoffe erzeugt werden soll. Die folgenden möglichen Zusatzstoffe können bis zu einem Anteil von 90 Gew.-% bezogen auf die eisenoxidhaltigen Reststoffe zugegeben werden:
- Aluminium
- Kupfer
- Mangan
- Magnesium
- Silicium
- Siliciumcarbid (SiC)
- Ferrochrom (FeCr)
- Ferromangan (FeMn)
- Ferrophosphor (FeP)
- Ferrosilicium (FeSi)
- Ferrosilicium-Magnesium (FeSiMg)
- Ferrotitan (FeTi)
- Chrom
- Nickel
- Ferronickel
- Molybdän
- Ferromolybdän
- Kobalt
- Ferrokobalt
- Zinkoxid
- Zirkonium
- Wolfram
- Vanadium
- Pulver aus Schnellarbeitsstahl (HSS)

Neben den bereits erwähnten Vorteilen hinsichtlich der erzielten Festigkeit und Dichte der mit Hilfe von Papierschlamm erzeugten Agglomerate ist als weiterer Vorteil der Verwendung von Papierschlamm der niedrige Preis zu nennen, da es sich bei Papierschlamm um ein Abfallprodukt handelt, das bei der Altpapierverwertung in großem Umfang anfällt. Zusätzlich sorgt der Papierschlamm dafür, dass die erzeugten Agglomerate bis zu einem gewissen Grade selbstreduzierend sind, so dass ein großer Anteil des Eisenoxids bei der Wiederverwertung in metallischem Zustand in das Stahlbad übergeht.

Neben dem oben beschriebenen, erfindungsgemäßen Verfahren betrifft die Erfindung auch ein Agglomerat, insbesondere ein Brikett oder Pellet, das durch das erfindungsgemäße Verfahren erhältlich ist.

Des Weiteren betrifft die Erfindung die Verwendung der Agglomerate im Rahmen der Stahlerzeugung, wobei die Agglomerate in einen Elektroofen, insbesondere einen Elektrolichtbogenofen eingebracht werden. Daneben ist auch die Verwertung in einem Induktionsofen, einem BOF/LD-Konverter, einem Hochofen, einem Schachtofen, einem Kupolofen oder einem Behandlungsgefäß, z. B. einer Pfanne denkbar. Auf diese Weise werden die in den Reststoffen enthaltenen Wertstoffe, d. h. insbesondere das hierin als Eisenoxid gebundene Eisen wieder in den Stahlerzeugungsprozess eingebracht.

### Ausführungsbeispiel

Walzenzunder (Wassergehalt: 5 Gew.-%) und Papierschlamm (Wassergehalt: 57 Gew.-%) wurden für 24 Stunden im Trockenschrank bei einer Temperatur von 85°C getrocknet. Der Wassergehalt wurde auf diese Weise jeweils unter 5 Gew.-% gebracht. Der Papierschlamm lag nach der Trocknung als flockiger Stoff mit einer Korngröße von weniger als 20 mm vor.

Anschließend wurde der Walzenzunder, der flockige Papierschlamm und eine kleine Menge Stahlspäne im Verhältnis 79:20:1 Gew.-% gemischt und mit Hilfe einer Kugelmühle zerkleinert, so dass Walzenzunder- und Papierschlammpartikel erhalten wurden, bei denen die Korngröße für jeweils 90 Gew.-% des Bestandteils unter 1 mm lag.

Die Mischung wurde in eine zylindrische Matrize für die Heißbrikettierung eingebracht. Die Brikettierung erfolgte bei einem Druck von 150 MPa und bei einer Temperatur von 140°C. Die Festigkeit (Spaltzugfestigkeit) der erhaltenen Briketts wurde mit Hilfe des Brazilian Test überprüft. Man erhielt Briketts einer Festigkeit von 3,2 MPa und einer Dichte von > 2,5 g/cm³.

### Hochtemperaturfestigkeit

Die vorgenannten Briketts wurden unter Hochtemperaturbedingungen auf ihre Festigkeit geprüft. Unter einer Belastung von 1 MPa behalten diese Briketts bis zu einer Temperatur von ca. 1000 °C ihre ursprüngliche Form. Ab dieser Temperatur wird das Brikett deformiert, behält aber die Integrität als ein Agglomerat. Es erzeugt keinen Staub und trägt die wertvollen Eisen-Einheiten in den tieferen Teil des metallurgischen Reaktors.

### Schmelzverhalten

Die erzeugten Briketts (800 g) und Stahlblöcke C45 (4000 g) wurden in einem Induktionsofen erhitzt und aufgeschmolzen. Die Briketts haben die Erhitzung überstanden. Das Eisenoxid wurde zum metallischen Eisen reduziert und im Metallbad aufgelöst. Die Schmelze wurde zur Abkühlung in eine Kokille gegossen. Der gegossene Metallblock wies in seiner Zusammensetzung keine erhöhten Werte von unerwünschten Elementen (z. B. Schwefel, Kupfer, Zinn) auf.

## Patentansprüche

1. Verfahren zur Agglomeration von eisenoxidhaltigen Reststoffen, wobei Papierschlamm und ggf. die Reststoffe zerkleinert werden und eine Mischung aus trockenen Reststoffen und trockenem Papierschlamm bei einer Temperatur zwischen 70 und 350 °C brikettiert wird, wobei der Wassergehalt der trockenen Reststoffe und des trockenen Papierschlamms jeweils weniger als 5 Gew.-% beträgt, wobei die Mischung 15 bis 35 Gew.-% trockenen Papierschlamm enthält und wobei der Mischung Stahlspäne, Gußspäne, HBI fines, DRI fines und/oder metallhaltige Verpackungsverbundstoffe zugefügt werden.

2. Verfahren nach Anspruch 1, **dadurch gekennzeichnet, dass** es sich bei den eisenoxidhaltigen Reststoffen zumindest teilweise um Zunder oder Walzenzunder handelt.

3. Verfahren nach Anspruch 1 oder 2, **dadurch gekennzeichnet, dass** die Mischung 65 bis 85 Gew.-% Reststoffe enthält.

4. Verfahren nach einem der Ansprüche 1 bis 3, **dadurch gekennzeichnet, dass** die Zerkleinerung gleichzeitig mit der Durchmischung der Reststoffe und des Papierschlamms in einer Kugelmühle oder in einer Schwingmühle durchgeführt wird.

5. Verfahren nach Anspruch 4, **dadurch gekennzeichnet, dass** als Mahlkörper zur Zerkleinerung der Reststoffe und des Papierschlamms zylindrische Körper eingesetzt werden.

6. Verfahren nach Anspruch 4 oder 5, **dadurch gekennzeichnet, dass** in der Kugelmühle oder Schwingmühle zusätzlich eine Trocknung und/oder eine Vorheizung der Mischung durchgeführt wird.

7. Verfahren nach einem der Ansprüche 1 bis 6, **dadurch gekennzeichnet, dass** die Brikettierung bei einer Temperatur zwischen 90 und 250°C, bevorzugt zwischen 90 und 150°C durchgeführt wird.

8. Verfahren nach einem der Ansprüche 1 bis 7, **dadurch gekennzeichnet, dass** die Brikettierung bei einem Druck von 10 bis 500 MPa, bevorzugt 30 bis 350 MPa und besonders bevorzugt 100 bis 200 MPa durchgeführt wird.

9. Verfahren nach einem der Ansprüche 1 bis 8, **dadurch gekennzeichnet, dass** der Mischung Aluminium, Kupfer, Mangan, Magnesium, Silicium, Siliciumcarbid, Ferrochrom, Ferromangan, Ferrophosphor, Ferrosilicium, Ferrosilicium-Magnesium, Ferrotitan, Chrom, Nickel, Ferronickel, Molybdän, Ferromolybdän, Kobalt, Ferrokobalt, Zinkoxid, Zirkonium, Wolfram, Vanadium und/oder Pulver aus Schnellarbeitsstahl zugegeben wird.

10. Agglomerat, insbesondere Brikett oder Pellet, erhältlich durch ein Verfahren nach einem der Ansprüche 1 bis 9, wobei der Gehalt an trockenem Papierschlamm, d.h. Faserstoffen auf Zellulosebasis 15 bis 35 Gew.-% beträgt.

11. Verwendung von Agglomeraten nach Anspruch 10 im Rahmen der Stahlerzeugung, wobei die Agglomerate in einen Elektroofen, insbesondere einen Elektrolichtbogenofen, einen Induktionsofen, einen BOF/LD-Konverter, einen Schachtofen, einen Kupolofen, ein Behandlungsgefäß, insbesondere eine Pfanne, oder einen Hochofen eingebracht werden.

## Claims

1. Method for the agglomeration of iron oxide-containing residual substances by means of which paper sludge and, as the case may be, the residual substances are comminuted and a mixture of dry residual substances and dry paper sludge is briquetted at a temperature ranging between 70 and 350 °C, with the water content of the dry residual materials and the dry paper sludge in each case being less than 5 % w/w and wherein the mixture contains 15 to 35 % w/w of dry paper sludge and wherein steel shavings, cast-material swarf, HBI fines, DRI fines and/or metal-containing composite packing material are added to the mixture.

2. Method according to claim 1, **characterized in that** the iron oxide-containing residual substances are, at least in part, scale or mill scale.

3. Method according to claim 1 or 2, **characterized in that** the mixture contains 65 to 85 % w/w of residual substances.

4. Method according to any one of the claims 1 to 3, **characterized in that** the size reduction is carried out simultaneously with mixing of the residual substances and the paper sludge in a ball mill or vibratory mill.

5. Method according to claim 4, **characterized in that** cylindrical bodies are used as grinding elements for the size reduction of the residual substances and the paper sludge.

6. Method according to claim 4 or 5, **characterized in that** a drying and/or preheating of the mixture is additionally carried out in the ball mill or vibratory mill.

7. Method according to any of claims1 to 6, **characterized in that** briquetting is performed at a temperature ranging between 90 and 250°C, preferably between 90 and 150°C.

8. Method according to any of claims 1 to 7, **characterized in that** briquetting is performed at a pressure ranging between 10 and 500 MPa, preferably between 30 and 350 MPa and particularly preferred between 100 and 200 MPa.

9. Method according to any of claims 1 to 8, **characterized in that** aluminum, copper, manganese, magnesium, silicon, silicon carbide, ferrochrome, ferromanganese, ferrophosphorus, ferrosilicon, ferrosilicon magnesium, ferrotitanium, chrome, nickel, ferronickel, molybdenum, ferromolybdenum, cobalt, ferrocobalt, zinc oxide, zirconium, tungsten, vanadium and/or high-speed steel powder are added to the mixture.

10. Agglomerate, in particular briquette or pellet, produced by a method according to any of the claims 1 to 9, wherein the content of dry paper sludge, i.e. fibrous substances on cellulose basis amounts to between 15 and 35 % w/w.

11. Use of agglomerates according to claim 10 in the framework of steelmaking, wherein the agglomerates are charged into an electric furnace, particularly into an electric arc furnace, an induction furnace, a BOF/LD converter, a shaft kiln, a cupola furnace, a treatment vessel, in particular a ladle, or a blast furnace.

## Revendications

1. Procédé d'agglomération de matières résiduelles contenant de l'oxyde de fer, selon lequel une boue de papeterie et éventuellement les matières résiduelles sont broyées, et un mélange de matières résiduelles séchées et de boue de papeterie séchée est briqueté à une température comprise entre 70 et 350 °C, la teneur en eau des matières résiduelles séchées et de la boue de papeterie séchée étant à chaque fois inférieure à 5 % en poids, le mélange contenant 15 à 35 % en poids de boue de papeterie séchée, et des copeaux d'acier, des tournures de fonte, des fines d'HBI, des fines de DRI et/ou des matériaux composites d'emballage contenant des métaux étant ajoutés au mélange.

2. Procédé selon la revendication 1, **caractérisé en ce que** les matières résiduelles contenant de l'oxyde de fer consistent au moins en partie en du mâchefer ou des battitures de laminoir.

3. Procédé selon la revendication 1 ou 2, **caractérisé en ce que** le mélange contient 65 à 85 % en poids de matières résiduelles.

4. Procédé selon l'une quelconque des revendications 1 à 3, **caractérisé en ce que** le broyage est réalisé simultanément avec le mélange des matières résiduelles et de la boue de papeterie dans un broyeur à billes ou dans un broyeur vibrant.

5. Procédé selon la revendication 4, **caractérisé en ce que** des corps cylindriques sont utilisés en tant que corps de broyage pour le broyage des matières résiduelles et de la boue de papeterie.

6. Procédé selon la revendication 4 ou 5, **caractérisé en ce qu'**un séchage et/ou un préchauffage du mélange sont en outre réalisés dans le broyeur à billes ou dans le broyeur vibrant.

7. Procédé selon l'une quelconque des revendications 1 à 6, **caractérisé en ce que** le briquetage est réalisé à une température comprise entre 90 et 250 °C, de préférence entre 90 et 150 °C.

8. Procédé selon l'une quelconque des revendications 1 à 7, **caractérisé en ce que** le briquetage est réalisé à une pression de 10 à 500 MPa, de préférence de 30 à 350 MPa et de manière particulièrement préférée de 100 à 200 MPa.

9. Procédé selon l'une quelconque des revendications 1 à 8, **caractérisé en ce que** de l'aluminium, du cuivre, du manganèse, du magnésium, du silicium, du carbure de silicium, du ferrochrome, du ferromanganèse, du ferrophosphore, du ferrosilicium, du ferrosilicium-magnésium, du ferrotitane, du chrome, du nickel, du ferronickel, du molybdène, du ferromolybdène, du cobalt, du ferrocobalt, de l'oxyde de zinc, du zirconium, du tungstène, du vanadium et/ou une poudre d'acier à coupe rapide sont ajoutés au mélange.

10. Agglomérat, notamment briquette ou pastille, pouvant être obtenu par un procédé selon l'une quelconque des revendications 1 à 9, dans lequel la teneur en boue de papeterie séchée, c.-à-d. en matières fibreuses à base de cellulose, est de 15 à 35 % en poids.

11. Utilisation d'agglomérats selon la revendication 10 dans le cadre de la formation d'acier, les agglomérats étant introduits dans un four électrique, notamment un four électrique à arc, un four à induction, un convertisseur BOF/LD, un four vertical, un cubilot, un récipient de traitement, notamment un poêlon, ou un haut fourneau.
